# FASCICULE DE BREVET EUROPEEN

(11) **EP 2 606 269 B1**
(45) Date de publication et mention de la délivrance du brevet: **04.05.2016**
(21) Numéro de dépôt: 11755412.1
(22) Date de dépôt: 11.08.2011
(51) Int. Cl.: F16L 33/01, F16L 59/14, F16L 59/153

(54) **EMBOUT DE CONNEXION D'UNE CONDUITE FLEXIBLE DE TRANSPORT D'UN FLUIDE CRYOGÉNIQUE.**
ENDSTÜCK FÜR DEN ANSCHLUSS EINES SCHLAUCHES FÜR DEN TRANSPORT EINER KRYOGENEN FLÜSSIGKEIT
END FITTING FOR CONNECTING A FLEXIBLE PIPE FOR TRANSPORTING A CRYOGENIC FLUID

(30) Priorité: 16.08.2010 FR 1056612
(43) Date de publication de la demande: 26.06.2013
(73) Titulaire: Technip France, 92400 Courbevoix (FR)
(72) Inventeur: ESPINASSE, Philippe, F-76420 Bihorel (FR); GEREZ, Jean-Michel, F-75015 Paris (FR); LECLERC, Olivier, F-76210 Gruchet-le-Valasse (FR); PREVOST, Pascal, F-76490 Villequier (FR)
(74) Mandataire: Blot, Philippe Robert Emile
(86) Numéro de dépôt international: PCT/FR2011/051906
(87) Numéro de publication internationale: WO 2012/022908

(56) Documents cités:
- EP-A2- 2 230 432
- WO-A1-2008/037867

## Description

La présente invention concerne une conduite flexible de transport d'un fluide cryogénique, selon le préambule de la revendication 1.

WO 2008/037867 décrit une conduite flexible de transport de fluide qui n'est pas destinée à transporter un fluide cryogénique.

Un fluide cryogénique issu par exemple d'un procédé de liquéfaction de gaz est par exemple du gaz naturel liquéfié présentant une température d'ébullition inférieure à -160°C.

Le transport de ce genre de fluide, notamment depuis une unité de liquéfaction vers un navire de transport ou depuis un navire de transport vers une unité de stockage, est réalisé généralement au moyen d'une conduite flexible de transport ayant un diamètre intérieur de l'ordre de 400 mm de façon à assurer un débit élevé et un transbordement rapide.

Les conduites flexibles utilisées pour effectuer ces opérations en milieu off-shore sont le plus souvent classées en deux catégories, les conduites flexibles aériennes et les conduites flexibles flottantes ou sous-marines.

Dans le cas d'une configuration de transbordement de type côte à côte dans laquelle le bateau est amené le long d'un quai ou d'une unité flottante, la conduite flexible aérienne a une longueur de l'ordre de 40 à 70 mètres. Dans le cas d'une configuration du type tandem dans laquelle le navire est amené à la poupe ou à la proue de l'unité flottante, le navire et l'unité flottante étant sensiblement alignés, la conduite flexible aérienne a une longueur de l'ordre de 100 à 170 mètres. La configuration côte à côte nécessite une conduite flexible plus résistante que dans l'autre configuration.

Pour un transbordement entre un navire et une unité flottante, au moyen d'une conduite flexible flottante ou sous-marine, cette conduite flexible a une longueur qui peut atteindre environ 350 mètres. Ces conduites flottantes ou sous-marines sont généralement celles qui travaillent dans les conditions les plus sévères du fait d'un rayon de courbure plus faible et d'une sollicitation dynamique plus forte due notamment au mouvement des supports flottants ainsi qu'une étanchéité plus difficile à maîtriser vis-à-vis de l'environnement extérieur étant donné que la conduite flexible peut être immergée.

D'une manière générale, la conduite flexible comprend de l'intérieur à l'extérieur plusieurs couches, à savoir :
- un tube intérieur ondulé, définissant une pluralité d'ondulations débouchant radialement vers l'axe,
- au moins une couche d'armures de traction, disposée autour du tube ondulé,
- au moins une couche d'isolation thermique, disposée autour de la couche d'armures, et
- une gaine externe étanche.

La conduite flexible peut également comporter une gaine intermédiaire étanche réalisée par enroulement et collage de bandes de caoutchouc, ou par extrusion d'un matériau polymérique, et disposée entre deux couches d'isolation thermique.

La gaine externe étanche est réalisée par enroulement et collage de bandes en caoutchouc ou par deux gaines polymériques tubulaires extrudées l'une sur l'autre.

Les conduites flexibles comportent également des embouts de connexion destinés à leur raccordement entre elles ou avec des équipements terminaux et ces embouts doivent être réalisés dans des conditions assurant à la fois une bonne solidarisation et une bonne étanchéité.

En effet, les embouts de connexion doivent assurer plusieurs fonctions qui sont la fixation de l'extrémité du tube ondulé, l'ancrage des armures de traction ainsi que la protection thermique de la gaine externe et des moyens de sertissage de cette gaine externe.

Pour cela, les embouts de connexion comprennent une partie avant comportant un ensemble d'éléments et plus particulièrement une bride d'extrémité avant de maintien du tube ondulé et des éléments de fixation de la couche d'armures. Les embouts de connexion comportent également une partie arrière formée d'au moins une bride d'extrémité arrière de sertissage de la gaine externe et de maintien des couches d'isolation thermique. Les brides d'extrémité, respectivement avant et arrière, sont reliées entre elles par des éléments de liaison de façon à assurer la cohésion entre les parties avant et arrière de l'embout de connexion.

La gaine externe est généralement composée de polymères qui deviennent fragiles à basse température et, en pratique ne doivent pas être soumis à des températures inférieures à -20°C.

Dans la partie courante de la conduite flexible, c'est-à-dire entre deux extrémités, les couches d'isolation thermique permettent d'éviter que le fluide cryogénique qui est à une température de l'ordre de -160°C, ne vienne refroidir excessivement la gaine externe.

Or, au niveau de chaque embout de connexion, les couches d'isolation thermique sont arrêtées ce qui peut éventuellement provoquer une rupture du pont thermique au niveau de la zone de sertissage de la gaine externe et ainsi refroidir excessivement l'extrémité de cette gaine externe.

L'invention a pour but de proposer un embout de connexion d'une conduite flexible qui permet d'éviter ce type d'inconvénient par des moyens simples à mettre en oeuvre.

L'invention a donc pour objet une conduite flexible selon la revendication 1.

D'autres caractéristiques de l'invention font l'objet des revendications dépendantes 2 à 7.

L'invention sera mieux comprise à la lecture de la description qui va suivre, donnée uniquement à titre d'exemple et faite en se référant aux dessins annexés, sur lesquels :
- la Figure 1 est une vue en perspective et partielle d'une conduite flexible de transport d'un fluide cryogénique,
- la Figure 2 est une demi-vue schématique partielle et en coupe axiale d'un premier mode de réalisation d'un embout de connexion, conforme à l'invention, et
- la Figure 3 est une demi-vue schématique et partielle en coupe axiale d'un second mode de réalisation d'un embout de connexion, conforme à l'invention.

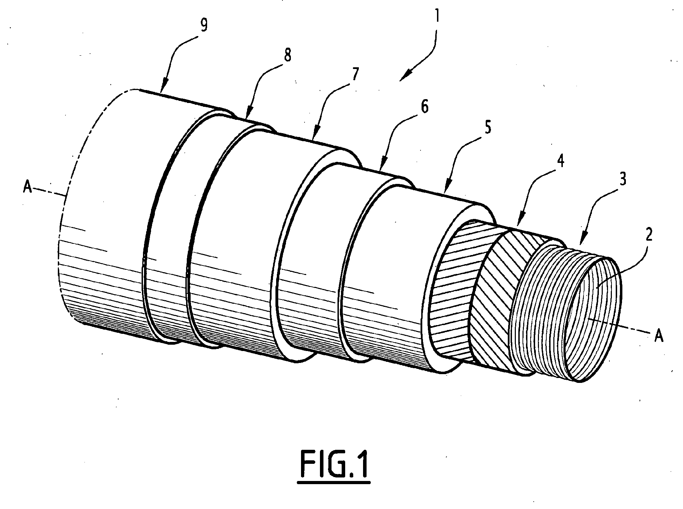

Sur la figure 1, on a représenté partiellement une conduite flexible 1 destinée à transporter un fluide cryogénique tel qu'un gaz liquéfié, depuis une unité de liquéfation vers un navire de transport ou depuis un navire de transport vers une unité de stockage. La conduite 1 a par exemple une longueur supérieure à 30 mètres et comprise notamment entre 30 et 350 mètres. Elle délimite un passage central 2 de circulation du fluide cryogénique d'axe AA.

A titre d'exemple, la conduite flexible 1 comprend de l'intérieur vers l'extérieur :
- un tube intérieur 3 ondulé, propre à assurer l'étanchéité au fluide et la résistance à la pression interne,
- au moins une couche 4 d'armures de traction en fibres de polyester enroulées ou en acier inoxydable austénitique, propre à supporter les charges axiales impliquées par la conduite 1,
- une couche 5 en fibres de polyester enroulées à pas court ayant pour fonction le maintien des armures de traction et un complément d'isolation thermique,
- un premier ensemble de couches 6 d'isolation thermique,
- une gaine 7 intermédiaire étanche,
- un deuxième ensemble de couches 8 d'isolation thermique, et
- une gaine externe 9 étanche réalisée par un roulement et collage de bandes en caoutchouc ou par deux gaines polymériques tubulaires et extrudées l'une sur l'autre.

La conduite flexible 1 comporte à chacune de ses extrémités, un embout de connexion destiné à relier plusieurs tronçons de conduites flexibles entre eux et également destiné à relier la conduite flexible avec des équipements terminaux. Ces embouts de connexion doivent être réalisés dans des conditions assurant à la fois une bonne solidarisation et une bonne étanchéité.

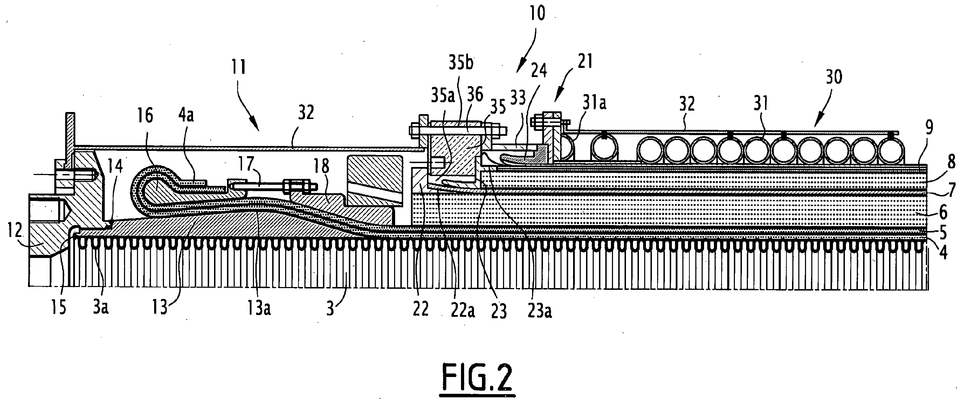

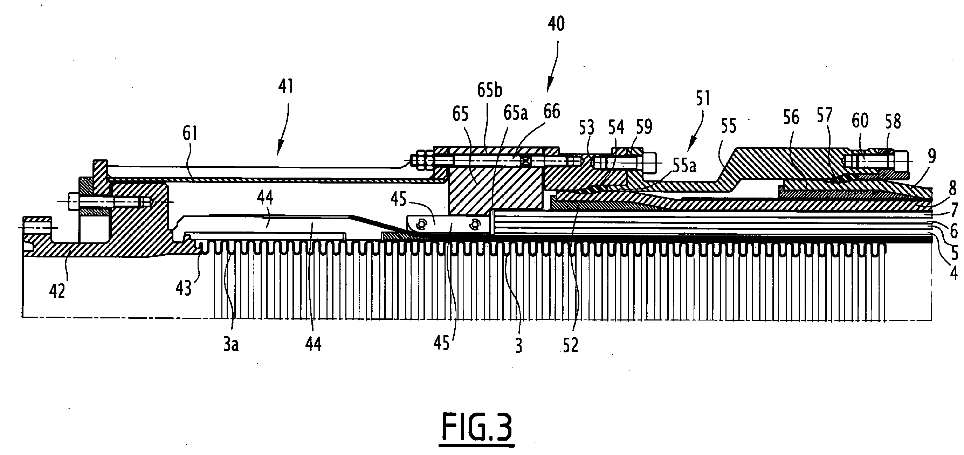

Sur les figures 2 et 3, on a représenté deux modes de réalisation de deux embouts de connexion, désignés respectivement par les références 10 et 40.

Sur ces figures, seuls les éléments des embouts 10 et 40 ayant un rapport avec l'invention ont été représentés, les autres éléments composant chacun de ces embouts de connexion ont été supprimés afin de faciliter la compréhension.

Les différentes couches 3 à 9 composant la conduite flexible 1 ont été représentées en coupe axiale.

Selon le premier mode de réalisation représenté à la figure 2, l'embout de connexion 10 se compose d'une partie avant 11 et d'une partie arrière 21.

La partie avant 11 de l'embout de connexion 10 comprend une bride d'extrémité 12 solidaire de l'extrémité libre 3a du tube ondulé 3 par l'intermédiaire d'une bague métallique 13. Cette bague métallique 13 est reliée à la bride d'extrémité avant 12 par un premier cordon de soudure 14 étanche et à l'extrémité libre 3a du tube ondulé 3 par un second cordon de soudure 15 étanche.

Dans le mode de réalisation représenté à la figure 2, les armures de traction de la couche d'armures 4 sont en fibres de polyester et l'ancrage de ces armures est réalisé en utilisant l'effet cabestan.

Pour cela, la bague 13 comporte, sur sa face externe, un bossage annulaire 13a et les extrémités 4a des armures sont fixées sur la bague 13 par un bloc d'ancrage 16 enfilé sur la bague 13 et sur lequel lesdites extrémités libres 4a des armures sont rabattues. Le bloc d'ancrage 16 est relié par des tirants 17 à un cône de blocage 18 également enfilé sur les armures de la couche d'armures 4. L'association du bloc d'ancrage 16 et du cône de blocage 18 relié par les tirants 17 permet de coincer les armures de la couche d'armures 4 sur le bossage 13a de la bague 13.

La partie arrière 21 comporte au moins une bride d'extrémité arrière de sertissage de la gaine externe 9 et de maintien de ladite au moins une couche 6 et 8 d'isolation thermique.

Dans l'exemple de réalisation représenté à la figure 2, la partie arrière 21 comprend une première bride 22 de maintien de la couche 6 d'isolation thermique et de fixation de la gaine intermédiaire 7 étanche. La gaine intermédiaire 7 étanche déborde sur un prolongement 22a de la bride 22 et est maintenue sur ce prolongement 22a par un collier 23 enfilé sur ledit prolongement 22a de façon à maintenir par coincement l'extrémité de la gaine intermédiaire 7 étanche.

L'extrémité de la couche 8 d'isolation thermique vient en butée contre le collier 23 qui comporte un prolongement 23a au-dessous duquel s'étend cette extrémité de la couche 8 d'isolation thermique. L'extrémité de la gaine externe 9 s'étend sur le prolongement 23a du collier 23 et est maintenue sur ledit prolongement 23a par une bride 24 de sertissage de ladite gaine externe 9.

L'extrémité de la conduite flexible 1 comporte devant l'embout de connexion 10, un limiteur de courbure 30 de type connu. Ce limiteur de courbure 30 est formé par des tubes 31 enroulés autour de la gaine externe 9 dont certains sont solidaires de la conduite flexible 1 et dont d'autres sont reliés entre eux par des tiges 32 solidaires de la bride d'extrémité 24 arrière. Le limiteur 30 comporte un demi-tube d'extrémité 31 a solidaire de la conduite flexible 1, d'une part et de la bride d'extrémité 24 arrière, d'autre part.

De façon à assurer la cohésion entre les parties, respectivement avant 11 et arrière 21, ces parties sont reliées entre elles par des éléments de liaison qui seront décrits ultérieurement.

Du fait de la circulation du fluide cryogénique à l'intérieur de la conduite flexible 1, la partie avant 11 de l'embout de connexion 10 est soumise à des températures froides étant donné que les couches 6 et 8 d'isolation thermique s'arrêtent avant ladite partie avant 11.

Afin d'éviter que la partie avant 11 froide puisse refroidir la partie arrière 21 et plus précisément la zone de sertissage de la gaine externe 9 par l'intermédiaire de la bride arrière 24, l'embout 10 comporte des moyens d'isolation thermique interposés entre les brides d'extrémité, respectivement avant 12 et arrière 24 des parties avant 11 et arrière 21.

Ainsi que montré à la figure 2, les moyens d'isolation thermique comprennent un bloc annulaire 35 en matériau isolant et comportant un orifice axial 35a de passage de la couche d'armures 4 et du tube ondulé 3.

Le matériau isolant composant le bloc annulaire 35 est avantageusement un composite comportant du verre ou de la céramique ou tout autre matériau approprié.

Un matériau connu sous le nom «permaglas» et comportant une résine en epoxy renforcée par un mat de fibres de verre convient tout particulièrement pour la réalisation du bloc annulaire 35. Ce matériau présente en effet une conductivité thermique faible, de l'ordre de 0,35 W.m⁻¹. K⁻¹, permettant d'atteindre à un bon niveau d'isolation thermique avec un bloc de faible épaisseur, typiquement de l'ordre de 100mm d'épaisseur, ce qui a pour avantage de réduire la longueur et le coût de l'embout de connexion. Par ailleurs, ce matériau n'est pas fragile à très basse température et peut endurer de très forts gradients de température. En outre, il présente une grande résistance à la compression, sa limite à la rupture en compression étant de l'ordre de 450 MPa, ce qui permet, comme cela sera expliqué plus loin, de le précontraindre en compression de sorte qu'il puisse résister à de fortes charges en flexion.

D'autres matériaux pourraient convenir pour réaliser le bloc annulaire 35, notamment ceux présentant une conductivité thermique inférieure à 1 W.m⁻¹. K⁻¹, avantageusement inférieure à 0,5 W.m⁻¹. K⁻¹, ainsi qu'une résistance à la rupture en compression supérieure à 70 MPa , avantageusement supérieure à 200MPa. Par exemple, certains bois durs naturels ou reconstitués pourraient être utilisés, sous réserve de les protéger de l'eau de mer par un revêtement ou une peinture adaptée.

Les éléments de liaison reliant ce bloc annulaire 35 à la bride d'extrémité 12 avant et à la bride d'extrémité 24 arrière comprennent des éléments de liaison avant constitués par un capot 32 reliant la bride d'extrémité 12 avant au bloc annulaire 35 et des éléments de liaison arrière constitués par un capot 33 reliant la bride d'extrémité 24 arrière avec ledit bloc annulaire 35.

Le capot avant 32 et le capot arrière 33 sont reliés entre eux par des tirants métalliques 36 traversant le bloc annulaire 35 par des alésages 35b et répartis autour de la conduite flexible 1.

Les tirants métalliques 36 ont pour fonction de transmettre les efforts mécaniques à travers le bloc annulaire 35 sans dégrader les propriétés d'isolation thermique du matériau composant ce bloc annulaire 35.

Ces tirants 36 assurent ainsi la cohésion entre les parties, respectivement avant 11 et arrière 21 de l'embout de connexion 10. De préférence, les tirants 36 sont précontraints en traction de façon à soumettre le matériau composant le bloc annulaire 35 à des contraintes de compression et ainsi éviter que ce dernier ne puisse être soumis à des contraintes de traction lorsque l'embout de connexion 10 est sollicité en flexion.

Le limiteur de courbure 30 évite que la conduite flexible 1 soit soumise à des rayons de courbure trop importants au niveau de l'embout de connexion 10 et les efforts engendrés par la courbure de cette conduite 1 sont transmis directement aux tirants 36 par l'intermédiaire de la bride d'extrémité 24 arrière sans affecter le bloc annulaire 35.

En effet, les matériaux isolants capables d'endurer de très basses températures et des forts gradients thermiques présentent généralement l'inconvénient de résister mal à la traction et au cisaillement. Cependant certains de ces matériaux, et notamment le verre, les céramiques et les composites à base de verre ou de céramique, résistent très bien à la compression, si bien qu'il est possible et avantageux de les précontraindre fortement pour les rendre apte à endurer des charges en traction ou en flexion.

Selon le second mode de réalisation représenté à la Fig. 3, l'embout de connexion 40 comporte également une partie avant 41 et une partie arrière 51.

La partie avant 41 comporte une bride d'extrémité 42 avant reliée à l'extrémité libre 3a du tube ondulé 3 par un cordon de soudure 43 étanche.

La partie avant 41 comporte également une bague métallique 44 enfilée sur l'extrémité libre 3a du type ondulé 3 et cette bague métallique 44 est solidaire de la bride d'extrémité 42 avant.

Dans ce mode de réalisation, la couche d'armures 4 est formée par des armures métalliques enroulées dont les extrémités libres 4a sont fixées sur la face externe de la bague métallique 44 par soudure. A proximité de la bague métallique 44, les armures de la couche d'armures 4 sont maintenues par un collier de serrage 45 enfilé sur ladite couche d'armures.

La partie arrière 51 comporte au moins une bride d'extrémité arrière de sertissage de la gaine externe 9 d'étanchéité et des couches 6 et 8 d'isolation thermique ainsi que de la gaine 7 intermédiaire étanche.

De préférence, la partie arrière 51 comporte une canule avant 52 enfilée sur la couche 6 d'isolation thermique et une première bride 53 de maintien de la gaine intermédiaire 7 d'étanchéité. L'extrémité libre de cette gaine intermédiaire 7 d'étanchéité est coincée entre la canule 52 et la première bride 53 par l'intermédiaire d'un cône de serrage 54.

La partie arrière 51 comporte aussi une deuxième bride 55 comportant une extrémité avant 55a intercalée entre l'extrémité de la gaine intermédiaire 7 d'étanchéité et la première bride 53 de façon à bloquer le cône de serrage 54. L'extrémité de la gaine externe 9 d'étanchéité est maintenue par la deuxième bride 55 au moyen d'une canule 56 enfilée sur la gaine intermédiaire 7 d'étanchéité. L'extrémité libre de la gaine externe 9 d'étanchéité est maintenue entre la deuxième bride 55 et la canule 56 par un cône de serrage 57. Le cône de serrage 57 est bloqué entre la gaine externe 9 d'étanchéité et la deuxième bride 55 par une troisième bride 58.

Afin d'éviter que la partie avant 41 froide puisse refroidir la partie arrière 51 et plus précisément la zone de sertissage de la gaine externe 9 étanche au moyen des brides 55 et 58 étant donné que les couches 6 et 8 d'isolation thermique s'arrêtent avant la partie avant 41, l'embout de connexion 40 comporte des moyens d'isolation thermique interposés entre la bride d'extrémité 42 avant et les brides 53, 55 et 58 arrière.

Ces moyens d'isolation thermique comprennent un bloc 65 annulaire en matériau isolant comportant un orifice axial 65a de passage de la couche d'armures 4 et du tube ondulé 3.

Le matériau isolant composant le bloc annulaire 65 est avantageusement un composite comportant du verre ou de la céramique ou tout autre matériau approprié. Le matériau de ce bloc annulaire 65 est identique au matériau du bloc 35.

Les éléments de liaison reliant ce bloc annulaire 65 à la bride d'extrémité 42 avant et aux brides 53, 55 et 58 arrière comprennent un élément de liaison avant constitué par un capot 61 reliant la bride d'extrémité 42 avec ledit bloc annulaire 65 par des organes de vissage 59 reliant la première bride 53 et la deuxième bride 55 et par des organes de vissage 60 reliant la deuxième bride 55 et la troisième bride 58.

Le capot avant 61 et la première bride 53 sont reliés entre eux par des tirants 66 métalliques traversant le bloc annulaire 65 par des alésages 65b répartis autour de la conduite flexible 1.

Les tirants métalliques 66 ont pour fonction de transmettre les efforts mécaniques à travers le bloc annulaire 65 sans trop dégrader les propriétés d'isolation thermique de ce bloc annulaire 65. Ces tirants métalliques 66 assurent ainsi la cohésion entre les parties, respectivement avant 41 et arrière 51. De préférence, ces tirants 66 sont précontraints en traction de façon à soumettre le matériau composant ledit bloc annulaire 65 à des contraintes de compression afin d'éviter que ce dernier puisse être soumis à des contraintes de traction lorsque l'embout de connexion 40 est sollicité en flexion.

Dans ce mode de réalisation également, les efforts engendrés par le limiteur de courbure, non représentés, lors d'une courbure de la conduite flexible 1, sont transmis directement aux tirants 66 sans affecter le bloc annulaire 65.

Dans les deux modes de réalisation, les couches d'isolation thermique de la conduite flexible se prolongent au-dessous de la zone de sertissage de la gaine externe étanche jusqu'à venir en contact avec le bloc annulaire isolant.

De la sorte, la zone de sertissage de la gaine externe étanche est protégée du froid pouvant venir soit directement de la conduite flexible, soit indirectement de la partie avant de l'embout de connexion.

Cette protection thermique évite que l'extrémité de la gaine externe étanche soit soumise à des températures trop froides pouvant fragiliser cette extrémité de la gaine externe étanche.

## Revendications

1. Conduite flexible (1) de transport d'un fluide cryogénique, comprenant au moins une couche (4) d'armures de traction, une gaine externe (9) étanche et un embout de connexion,
**caractérisée par** un tube intérieur (3) ondulé, propre à assurer l'étanchéité au fluide et la résistance à la pression interne, la couche (4) d'armures de traction étant disposée autour du tube ondulé (3), la conduite flexible (1) comportant au moins une couche (6, 8) d'isolation thermique, disposée autour de la couche d'armures (4), la gaine externe (9) étanche étant disposée autour de la couche (6, 8) d'isolation thermique,
ledit embout (10 ; 40) comprenant une partie avant (11 ; 41) comportant une bride d'extrémité (12 ; 42) avant de maintien du tube ondulé (3) et des éléments (16, 17, 18 ; 44) de fixation de la couche d'armures (4) et une partie arrière (21 ; 51) comportant au moins une bride d'extrémité (24 ; 53, 55, 58) arrière de sertissage de la gaine externe (9) et de maintien de la couche (6, 8) d'isolation thermique, les brides d'extrémité, respectivement avant (12 ; 42) et arrière (24 ; 53, 55, 58) étant reliées entre elles par des éléments de liaison (32, 33 ; 61, 59, 60),
l'embout (10;40) comportant des moyens (35 ; 65) d'isolation thermique interposés entre les brides d'extrémité, respectivement avant (12 ; 42) et arrière (24 ; 53, 55, 58), pour isoler la partie arrière (21 ; 51) de la partie avant (11 ; 41) de l'embout de connexion (10 ; 40).

2. Conduite flexible (1) selon la revendication 1, **caractérisée en ce que** les moyens d'isolation thermique comprennent un bloc annulaire (35 ; 65) en matériau isolant comportant un orifice axial (35a ; 65a) de passage de la couche d'armures (4) et du tube ondulé (3).

3. Conduite flexible (1) selon la revendication 1 et 2, **caractérisée en ce que** les éléments de liaison comprennent des éléments de liaison (32 ; 61) avant reliant à la bride d'extrémité avant (12 ; 42) au bloc annulaire (35 ; 65) et des éléments de liaison arrière (33 ; 59, 60) reliant ladite au moins bride d'extrémité (24 ; 53, 55, 58) arrière au bloc annulaire (35 ; 65).

4. Conduite flexible (1) selon la revendication 3, **caractérisée en ce que** les éléments de liaison, respectivement avant (32 ; 61) et arrière (59, 60) sont reliés entre eux par des tirants métalliques (36 ; 66) traversant ledit bloc annulaire (35 ; 65) par des alésages et répartis autour de la conduite flexible (1).

5. Conduite flexible (1) selon la revendication 4, **caractérisée en ce que** les tirants (36 ; 66) sont précontraints en traction.

6. Conduite flexible (1) selon l'une quelconque des revendications 2 à 5, **caractérisée en ce que** le matériau isolant du bloc annulaire (35, 65) est un matériau composite comportant du verre ou de la céramique.

7. Conduite flexible (1) selon l'une quelconque des revendications 1 à 6, **caractérisée en ce que** l'extrémité de ladite au moins couche d'isolation (6, 8) thermique s'étend au-dessous de la bride d'extrémité (24 ; 53, 55, 58) arrière jusqu'au bloc annulaire (35 ; 65).

## Patentansprüche

1. Flexible Transportleitung (1) eines kryogenen Fluids, umfassend mindestens eine Zugarmierungsschicht (4), einen dichten Außenmantel (9) und ein Anschlussendstück,
**gekennzeichnet durch** einen gewellten Innenschlauch (3), der imstande ist, die Dichtigkeit gegenüber dem Fluid und die Festigkeit gegenüber dem Innendruck sicherzustellen, wobei die Zugarmierungsschicht (4) um den gewellten Schlauch (3) angeordnet ist, wobei die flexible Leitung (1) mindestens eine Wärmeisolationsschicht (6, 8) aufweist, die um die Armierungsschicht (4) angeordnet ist, wobei der dichte Außenmantel (9) um die Wärmeisolationsschicht (6, 8) angeordnet ist,
wobei das Endstück (10; 40) einen vorderen Teil (11; 41) umfasst, der einen vorderen Endhalteflansch (12; 42) des gewellten Schlauchs (3) und der Befestigungselemente (16, 17, 18; 44) der Armierungsschicht (4) aufweist, und einen hinteren Teil (21; 51), der mindestens einen hinteren Endflansch (24; 53, 55, 58), für dem Außenmantels (9) crimpen und der Wärmeisolationsschicht (6, 8) erhalten, aufweist, wobei der jeweilige vordere (12; 42) und hintere (24; 53, 55, 58) Flansch untereinander mit Hilfe von Verbindungselementen (32, 33; 61, 59, 60) verbunden sind,
wobei das Endstück (10; 40) Wärmeisolationsmittel (35; 65) aufweist, die zwischen den dem jeweiligen vorderen (12; 42) und hinteren (24; 53, 55, 58) Enflansch angeordnet sind, um den hinteren Teil (21; 51) vom vorderen Teil (11; 41) des Anschlussendstücks (10; 40) zu isolieren.

2. Flexible Leitung (1) nach Anspruch 1, **dadurch gekennzeichnet, dass** die Wärmeisolationsmittel einen ringförmigen Block (35; 65) aus Isolationsmaterial umfassen, der eine axiale Durchgangsöffnung (35a; 65a) der Armierungsschicht (4) und des gewellten Schlauchs (3) aufweist.

3. Flexible Leitung (1) nach Anspruch 1 und 2, **dadurch gekennzeichnet, dass** die Verbindungselemente vordere Verbindungselemente (32; 61) umfassen, die den vorderen Endflansch (12; 42) mit dem ringförmigen Block (35; 65) verbinden und hintere Verbindungselemente (33; 59, 60), die den mindestens hinteren Endflansch (24; 53, 55, 58) mit dem ringförmigen Block (35; 65) verbinden.

4. Flexible Leitung (1) nach Anspruch 3, **dadurch gekennzeichnet, dass** die jeweiligen vorderen (32; 61) und hinteren (59, 60) Verbindungselemente untereinander anhand metallischer Ankerstab (36; 66) verbunden sind, welche den ringförmigen Block (35; 65) durch Bohrungen durchqueren und um die flexible Leitung (1) verteilt sind.

5. Flexible Leitung (1) nach Anspruch 4, **dadurch gekennzeichnet, dass** die Ankerstab (36; 66) zugvorgespannt sind.

6. Flexible Leitung (1) nach einem der Ansprüche 2 bis 5, **dadurch gekennzeichnet, dass** das Isolationsmaterial des ringförmigen Blocks (35, 65) ein Verbundmaterial ist, das Glas oder Keramik aufweist.

7. Flexible Leitung (1) nach einem der Ansprüche 1 bis 6, **dadurch gekennzeichnet, dass** sich das Ende der mindestens Wärmeisolationsschicht (6, 8) unter dem hinteren Endflansch (24; 53, 55, 58) bis zum ringförmigen Block (35; 65) erstreckt.

## Claims

1. Flexible pipe (1) for transporting a cryogenic fluid, comprising at least one tensile armour layer (4), a leak proof sealed external sheath (9) and a connecting end fitting,
**characterised in that** it comprises an inner tube (3) suitable for ensuring leak proof sealing for the fluid and resistance to internal pressure, the tensile armour layer (4) being arranged around the corrugated tube (3), the flexible pipe comprising at least one thermal insulation layer (6, 8), arranged around the tensile armour layer (4), the leak proof sealed external sheath (9) being disposed around the thermal insulation layer (6, 8),
the said end fitting (10 ; 40) including a front part (11 ; 41) comprising a front end flange (12 ; 42) for holding in place the corrugated tube (3) and elements (16, 17, 18 ; 44) for fastening the armour layer (4) and a rear part (21 ; 51) comprising at least one rear end flange (24 ; 53, 55, 58) for crimping the leak proof sealed external sheath (9) and for holding in place the thermal insulation layer (6, 8), the front end flanges (12 ; 42) and the rear end flanges (24 ; 53, 55, 58), respectively being connected to each other by connecting elements (32, 33 ; 61, 59, 60),
the end fitting (10 ; 40) comprising thermal insulation means (35 ; 65) interposed between the front end flanges (12 ; 42) and the rear end flanges (24 ; 53, 55, 58), respectively, in order to isolate the rear part (21 ; 51) from the front part (11 ; 41) of the connecting end fitting (10 ; 40).

2. Flexible pipe (1) according to claim 1, **characterised in that** the thermal insulation means comprise an annular block (35 ; 65) made of insulating material comprising an axial orifice (35a; 65a) for the passage of the armour layer (4) and the corrugated tube (3).

3. Flexible pipe (1) according to claim 1 or 2, **characterised in that** the connecting elements comprise front connecting elements (32 ; 61) connecting the front end flange (12 ; 42) to the annular block (35 ; 65) and rear connecting elements (33 ; 59, 60) connecting the said at least rear end flange (24 ; 53, 55, 58) to the annular block (35 ; 65).

4. Flexible pipe (1) according to claim 3, **characterised in that** the front connecting elements (32 ; 61) and rear connecting elements (59, 60), respectively, are connected to each other by metal tie rods (36 ; 66) passing through said annular block (35 ; 65) through bores distributed around the flexible pipe (1).

5. Flexible pipe (1) according to claim 4, **characterised in that** the tie rods (36 ; 66) are prestressed in tension.

6. Flexible pipe (1) according to any one of claims 2 to 5, **characterised in that** the insulating material of the annular block (35, 65) is a composite material consisting of glass or ceramic.

7. Flexible pipe (1) according to any one of claims 1 to 6, **characterised in that** the end of said at least one thermal insulation layer (6, 8) extends below the rear end flange (24 ; 53, 55, 58) up to the annular block (35 ; 65).
